# EUROPEAN PATENT SPECIFICATION

(11) **EP 2 791 045 B1**
(45) Date of publication and mention of the grant of the patent: **28.03.2018**
(21) Application number: 12832706.1
(22) Date of filing: 06.12.2012
(51) Int. Cl.: B67D 1/04, B67D 1/08, B67D 1/12

(54) **COMBINATION OF A CONTAINER FOR A LIQUID FOODSTUFF AND A QUANTITY OF PROPELLANT AND USE OF A PROPELLANT**
KOMBINATION EINES BEHÄLTERS FÜR EIN FLÜSSIGES LEBENSMITTEL UND FÜR EINE MENGE EINES TREIBMITTELS UND VERWENDUNG EINES TREIBMITTELS
COMBINATION D'UN CONTENEUR POUR UN ALIMENT LIQUIDE ET UNE QUANTITÉ DE PROPULSEUR ET UTILISATION D'UN PROPULSEUR

(30) Priority: 15.12.2011 BE 201100722
(43) Date of publication of application: 22.10.2014
(73) Proprietor: Cardiff Group, Naamloze Vennootschap, 3520 Zonhoven (BE)
(72) Inventor: STANDAERT, Geert Norbert R., B-3520 Zonhoven (BE); VANDEBRIEL, Imar, B-3940 Hechtel-Eksel (BE)
(74) Representative: Donné, Eddy
(86) International application number: PCT/BE2012/000052
(87) International publication number: WO 2013/086587

(56) References cited:
- EP-A1- 2 371 759
- US-A- 3 083 875
- US-A- 3 613 954
- US-A1- 2008 105 711
- CHIEN-PING CHAI KAO ET AL: "Vapor Pressures of Hexafluoroethane and Octafluorocyclobutane", JOURNAL OF CHEMICAL & ENGINEERING DATA, vol. 45, no. 2, 1 March 2000 (2000-03-01), pages 295-297, XP055022160, ISSN: 0021-9568, DOI: 10.1021/je9901435

## Description

The present invention relates to a combination of a container for a liquid foodstuff and a quantity of propellant and use of a propellant.

In containers for a liquid foodstuff, where the foodstuff must flow out, for example by opening a tap, pressure is required on the foodstuff to make it flow.

This pressure is generally provided, in beer kegs for example, by a propellant, in practice generally carbon dioxide gas (CO2) from a supply reservoir in which it is in the liquid state and/or a high pressure gaseous state, that places the container under pressure so that the beer can flow. The supply reservoir can be large or small, and connected directly or via a hose or pipe system to the container.

A problem with such a system is that at tap temperature, typically 5 to 10°C, the CO2 vapour pressure is relatively high, approx. 4000 kPa, and at room temperature approx. 7000 kPa.

This has four detrimental consequences. The first consequence is that this pressure is far too high for the beer to flow out of the container in a controlled way, the second consequence is that most containers cannot withstand such pressures, the third consequence is that it is not possible, without the availability of expensive equipment that can operate at high pressure or very low temperature, to refill a spent CO2 supply reservoir, and the fourth consequence is that this supply reservoir must be constructed to withstand the said high pressures and is thus relatively expensive.

In practice the first two disadvantages are solved by equipping the container and/or supply reservoir with an expander that reduces the pressure to a few hundred kPa, and if applicable by equipping the container with overpressure protection.

This makes the container-supply reservoir combination expensive and complex.

Moreover, there is always a part of the device that is under high pressure, and thus must withstand such a high pressure or it would run the risk of explosion.

The third disadvantage is usually solved by not reusing spent supply reservoirs, which of course is a waste of relatively expensive pressure-resistant articles, or by collecting and transporting them to a place where the necessary equipment is available. This too has many practical disadvantages and remains expensive.

Furthermore, the use of CO2 also has the disadvantage that it is a relatively small molecule, which means that the materials from which the container components are made must be specifically designed to present no or only limited CO2 permeability in the long term, in order to prevent a CO2 supply reservoir emptying over a period of weeks to months, with no pressure then available to make the foodstuff flow, as a result of CO2 diffusion, or that the foodstuff absorbs much more CO2 from the supply reservoir than is desirable for flavour reasons.
Commonly used plastics, such as polyethylene or polypropylene for example, are not suitable for keeping CO2 under pressure for a longer time without further measures such as special coatings.
As a result the choice of usable materials is limited.

A combination of a container for a liquid foodstuff and a quantity of propellant according to the preamble of claim 1 is known from US 3 083 875 A1. The purpose of the present invention is to provide a solution to at least one of the aforementioned and other disadvantages, by providing a combination of a container for a liquid foodstuff and a quantity of propellant to put the container under pressure according to claim 1. The term propellant is used here, as is usual in this field, for a product or mixture of products that are partly gaseous and partly liquid or solid, whereby the fraction that is gaseous depends on the volume of the space in which the product is located, the quantity of product present in this volume, and the temperature of the system. Not only the gaseous part, but also the liquid part or solid part of the product is called propellant.

Such a combination has the advantage that a space or reservoir provided for such a propellant can be filled with relatively simple means, that can only handle a pressure of 1000 kPa, while providing sufficient pressure to make this foodstuff flow out of the container, also at the ideal consumption temperature of the foodstuff.

The combination can also be constructed in materials that are not necessarily able to withstand a high pressure and are thus cheaper.

A reduction valve is not necessary either, so that this relatively expensive component can be avoided. Nevertheless if a reduction valve is used, it can be constructed much more simply on account of the much lower pressures.

Preferably the vapour pressure at 5°C is at least 150 kPa, and/or the vapour pressure at 25°C is a maximum of 700 kPa.

Preferably the propellant contains at least two atoms of carbon per molecule.

This has the advantage that because such propellants have relatively large molecules, and thus cannot significantly diffuse through most standard plastics, the container can be constructed from cheap materials.

Preferably the propellant consists of 1,1,1,2,3,3,3. heptafluoropropane, HFC-227, or 1,1,1,2 tetrafluoroethane, HFC 134a or contains this. According to the invention the container comprises a rigid outer container and a flexible inner container, whereby the container is designed to be placed under pressure by means of the presence of at least a part of the quantity of propellant in the space between the inner container and outer container.
This is a practical way to construct a container for a liquid foodstuff, whereby the liquid foodstuff is in the flexible inner container when the container is filled with liquid foodstuff.
In a preferred embodiment the vapour pressure of the propellant at all temperatures between 1°C and 30°C is greater than the vapour pressure of the components of the liquid foodstuff at the same temperature.
An advantage of this is that an undesirable situation is avoided, i.e. one that arises due to components of the liquid foodstuff, in particular CO2 in soft drinks and beer, being able to escape from the drink at a pressure below their equilibrium pressure.
Although in this case there is sufficient pressure to make the drink flow out of the container, this is nonetheless an undesirable situation because the CO2 is extracted from the drink, and the drink thus contains less CO2 than expected, such that flavour changes can occur.

In such a case, the part of the container in which the drink is located will be filled with the escaped gas and/or with foam, such that gas or foam instead of the drink can flow out of the opening, certainly when the container is not kept completely straight.

By selecting the propellant such that it satisfies the above preferred characteristic, this is prevented.

In a further preferred embodiment the container is designed to completely contain the quantity of propellant within itself.

In order to be able to fulfil its role, the container must of course also be able to contain within itself the quantity of foodstuff for which it is designed.

This has the advantage that a ready-to-use container in which the propellant is already present can be delivered to an end consumer ready for use, whereby a separate capsule of propellant is not needed.
Preferably the container comprises a closing part with a stop valve, whereby the closing part, when the stop valve is open, contains the opening and whereby the closing part contains a space for the liquid part of the quantity of propellant.

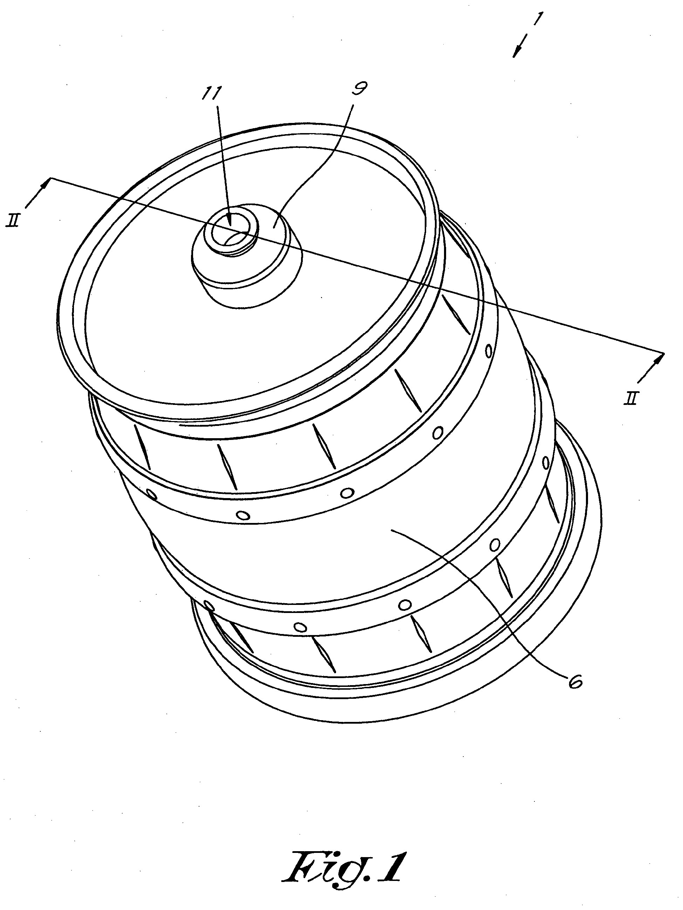

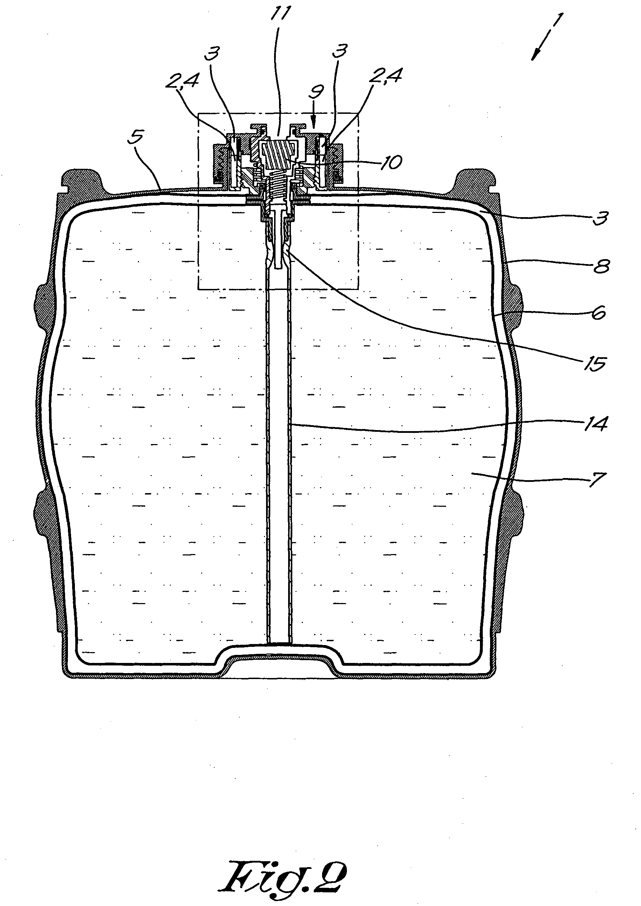

The closing part is not necessarily equipped with a tap to also operate the stop valve, and is to be considered as separate from this. Such a tap can be affixed just before use so that this protruding, and thus susceptible to damage, component cannot be damaged during transport of the container.
The space for the liquid part of the propellant can be closed off from the rest of the container via a removable block, whereby the container is activated by removing or piercing the block, as a result of which the propellant can exert pressure on the foodstuff.
The invention also relates to the use of a propellant, according to claim 13. With the intention of better showing the characteristics of the invention, a few preferred embodiments of a combination and use according to the invention are described hereinafter by way of an example, without any limiting nature, with reference to the accompanying drawings, wherein:
Figure 1 schematically shows a perspective view of a combination according to the invention;
figure 2 shows a cross-section of the combination of figure 1;
figure 3 shows the part designated in figure 2 by F3 on a larger scale; and
figure 4 shows a cross-section of a combination not according to the invention.
The combination shown in figures 1, 2 and 3 consists of a container 1 for a liquid foodstuff, in this case a beer keg, and a quantity of propellant 2. This propellant is partly in a gaseous state, thus a gaseous part 3, and partly in a liquid state, thus a liquid part 4. In this example the propellant 2 is 1,1,1,2,3,3,3 heptafluoropropane or HFC-227.
At 5°C this propellant has a vapour pressure of 235 kPa, and at 25°C a vapour pressure of 458 kPa. If the pressure in the space in which the propellant 2 is located is less than the said pressure, the liquid part 4 of the propellant will partially evaporate into a gaseous propellant 2, until the pressure is the said pressure. If the pressure in the space in which the propellant is located is greater than the said pressure, the gaseous part 3 of the propellant 2 will condense into liquid propellant 2.
The container 1 has a non-flexible outer wall or outer container 5, for example made of polyethylene, a flexible inner container 6 made of film and intended to contain beer 7, and a flexible intermediate container 8, also made of film.

The inner container 6 and intermediate container 8 are secured to a closing part 9 that is equipped for mounting a tap on it.

The closing part 9 also comprises a stop valve 10 that can be activated by a tap to be mounted, and which can open and close an opening 11 to allow the beer 7 to flow out.

The closing part 9 also comprises an internal space 12 that acts as a storage space for the liquid part 4 of the propellant 2. This space 12 has an open connection via channels 13 to the space between the inner container 6 and the intermediate container 8.

The closing part 10 is connected to a riser pipe 14, in which a flow resistance 15 is affixed.

This flow resistance 15 essentially consists of a flexible part of silicone rubber.

The internal space 12 is provided with an opening to the outside with a conical rubber seal 16, which is placed in a conical recess 17.

The operation of the combination is simple and as follows.

The inner container 6 is filled with beer 7 by opening the stop valve 10, applying a vacuum via the opening 11 such that the inner container 6 is sucked completely empty, and then by introducing the desired quantity of beer 7 into the inner container 6 via the opening 11.

The space 12 is then filled with propellant 2 in its liquid state. This is done by inserting a hollow needle through the seal 16 and introducing the desired quantity of propellant 2 into the space 12 via this hollow needle under a pressure at which the propellant 2 is liquid, thus a pressure of 500 kPa at 25°C for example.

The needle is then withdrawn, whereby as a result of the pressure exerted by the propellant on the seal. 16, this seal 16 is pushed in the recess 17, such that the opening formed by the needle is again pushed shut so that the propellant 2 cannot escape.

The liquid part 4 of the propellant 2 will now partly evaporate into a gaseous propellant 2, until the pressure in the space 12 and the connected space between the inner container 6 and intermediate container 8, is equal to the vapour pressure of the propellant 2.

The propellant 2 is selected such that at all temperatures at which the container 1 is intended to operate, it has a higher vapour pressure than the volatile components dissolved in the beer.

As a result the container 1 is placed under pressure and is ready for use, which is the situation as shown in figures 1 and 2 and 3.

When the stop valve 10 is now activated by the tap (not shown), beer 7 flows from the container 1, more specifically from the flexible inner container 6 through the opening 11 to the outside, as a result of the pressure exerted on the inner container 6 by the propellant 2.

The beer 10 hereby passes the flow resistance 15 in the riser pipe 14.

This flow resistance 15 depends on the pressure difference between the container 1 and atmospheric pressure, whereby the resistance that the flowing beer experiences is greater at a greater pressure difference. This pressure difference is not constant because the container 1 can be used at different temperatures, whereby the pressure in the container 1 is higher at a higher temperature.

The flow resistance 15 is designed such that as a result of this pressure difference the flexible part in the riser pipe 14 deforms to a greater extent at a higher pressure difference, and pushes the riser pipe 14 closed to a greater extent. As a result, the outflow rate is more or less independent of the pressure difference.

Because the beer 7 flows out of the container 1, the volume of the space between the inner container 6 and the intermediate container 8 becomes larger, such that the pressure in this space falls. As a result of this some of the liquid part 4 of the propellant 2 will evaporate, so as to make the pressure in this space equal to the vapour pressure of the propellant 2.

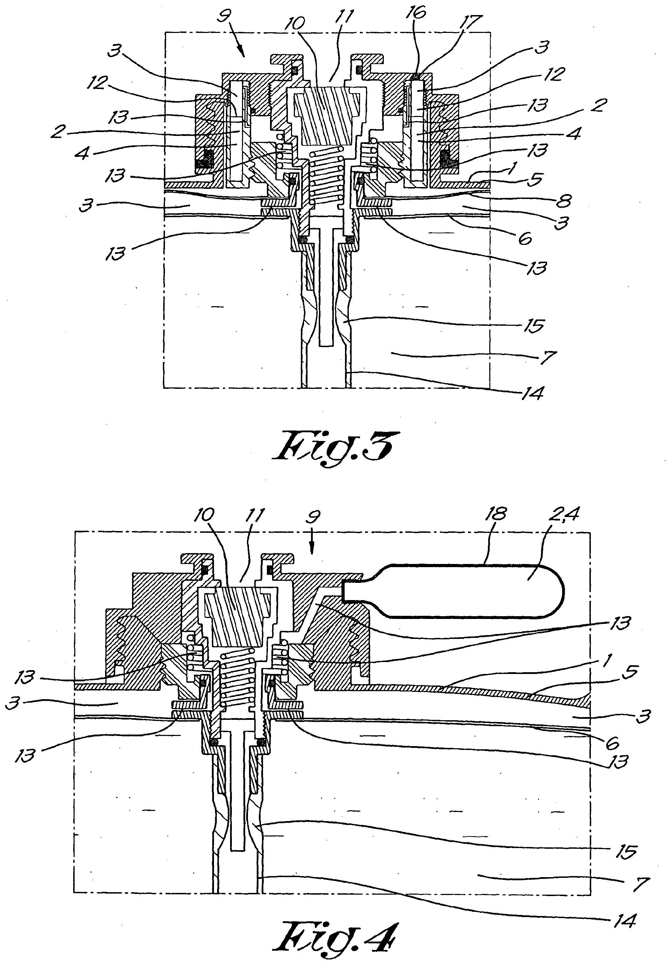

The combination shown in figure 4 is not part of the invention and essentially differs from the embodiment described above in two aspects. The first difference is that there is no internal space 12 for a liquid part 4 of the propellant 2. Instead of this there is a separate reservoir 18 for propellant 2, and also a connection for this reservoir 18.
Before this reservoir 18 is connected to the container 1, all propellant 2 is in the reservoir 18. After connection a part the propellant 2 will flow to the container.
The second difference is that there is no intermediate container 8. The reservoir 18 is connected to the space between the outer container 5 and the inner container 6, where the gaseous part 3 of the propellant 2 is primarily located.
It is also possible that absolutely no space 12 or reservoir 18 is provided for propellant 2, but the propellant is brought directly into the space outside the inner container 6 but inside the outer container 5, and from there exerts pressure directly on the inner container 6. Of course the closing part 9 or the outer container 5 must be provided with a possibility for introducing the propellant 2.
As an alternative to the flow resistance 15, a flow control can be fitted on the tap in order to be able to tap off, both when the container has a relatively low temperature and thus low pressure, and when the container has a higher temperature and thus higher pressure.
In the above example the combination is shown such that the quantity of propellant 2 is already connected to the container 1. It is however also possible to consider the combination as a container for a drink and a quantity of propellant that are not connected together, but which are designed to be connected and to work together.

## Claims

1. Combination of a container (1) for a liquid foodstuff and a quantity of propellant (2) to put the container (1) under pressure in order to make the foodstuff flow out of the container (1) via an opening (11), whereby the container (1) comprises a rigid outer container (5) and a flexible inner container (6), whereby the container (1) is designed to be placed under pressure through at least a part of the quantity of propellant (2) being in the space between the inner container and outer container, whereby the container is designed to be put under pressure by means of the presence of at least a part of the quantity of propellant in the space between the inner container and the intermediate container,
**characterised in that** at a temperature of 5°C the propellant (2) has a vapour pressure greater than 115 kPa and at a temperature of 25°C has a vapour pressure of less than 1000 kPa.

2. Combination according to claim 1, **characterised in that** the vapour pressure of the propellant (2) at 5°C is at least 150 kPa.

3. Combination according to any one of the previous claims, **characterised in that** the vapour pressure of the propellant (2) at 25°C is at most 700 kPa.

4. Combination according to any one of the previous claims, **characterised in that** the quantity of propellant (2) is at least partly in a liquid state (4) in a reservoir (18), and the container (1) and/or the reservoir (18) is or are equipped with connection means through which the reservoir (18) can be connected to the container (1) to put it under pressure.

5. Combination according to claim 4, **characterised in that** the container (1) comprises a closing part (9) with a stop valve (10), whereby the closing part (9), when the stop valve (10) is open, comprises the opening (11), and whereby the closing part (9) comprises a space (12) for the liquid part (4) of the quantity of propellant (2).

6. Combination according to any one of the previous claims, **characterised in that** the container (1) is designed to completely contain the quantity of propellant (2) within itself.

7. Combination according to any one of the previous claims, **characterised in that** the container (1) comprises a flow resistance (15) for the drink flowing out of the container (1) whereby the flow resistance (15) depends on the pressure in the container (1).

8. Combination according to any one of the previous claims, **characterised in that** the container (1) is equipped with a reduction valve that prevents the flow of the propellant (2) if the pressure in the space between the inner container (6) and the outer container (5) is greater than the vapour pressure of the propellant (2) less a certain value.

9. Combination according to any one of the previous claims, **characterised in that** the liquid foodstuff is a soft drink or beer, containing CO2, and that the vapour pressure of the propellant (2) at all temperatures between 1°C and 30°C is greater than the vapour pressure of the CO2 in the foodstuff at the same temperature.

10. Combination according to any one of the previous claims, **characterised in that** the liquid foodstuff is beer.

11. Combination according to any one of the claims 1 to 8,
**characterised in that** the foodstuff is a sauce.

12. Combination according to any one of the previous claims, **characterised in that** the propellant (2) consists of or contains 1,1,1,2,3,3,3 heptafluoropropane or HFC-227, or 1,1,1,2 tetrafluoroethane or HFC 134a.

13. Use of a propellant (2), to place a liquid foodstuff under pressure in a container (1) that is intended to let the liquid foodstuff flow out in a controlled way, whereby the container (1) comprises a rigid outer container (5) and a flexible inner container (6), whereby the container (1) is placed under pressure by introducing a part of the quantity of propellant (2) in the space between the inner container (6) and the outer container (5), whereby the container (1) additionally comprises an intermediate container located between the outer container (5) and the inner container (6), whereby the container (1) is placed under pressure by introducing a part of the quantity of propellant (2) in the space between the inner container (6) and the intermediate container (8), whereby the propellant (2) at a temperature of 5°C has a vapour pressure greater than 115 kPa and at a temperature of 25°C has a vapour pressure of less than 1000 kPa.

14. Use according to claim 13, **characterised in that** the vapour pressure of the propellant (2) at 5°C is at least 150 kPa.

15. Use according to claim 13 or 14, **characterised in that** the vapour pressure of the propellant (2) at 25°C is at most 700 kPa.

16. Use according to any one of the claims 13 to 15,
**characterised in that** the foodstuff is a drink.

17. Use according to any one of the claims 13 to 16,
**characterised in that** the foodstuff is a soft drink or beer, containing CO2, and that the vapour pressure of the propellant (2) at all temperatures between 1°C and 30°C is greater than the vapour pressure of the CO2 in the foodstuff at the same temperature.

18. Use according to any one of the claims 13 to 15,
**characterised in that** the foodstuff is a sauce.

## Patentansprüche

1. Kombination eines Behälters (1) für ein flüssiges Nahrungsmittel und einer Treibmittelmenge (2), um den Behälter (1) unter Druck zu setzen, um das Nahrungsmittel durch eine Öffnung (11) aus dem Behälter (1) strömen zu lassen, wobei der Behälter (1) einen starren äußeren Behälter (5) und einen flexiblen inneren Behälter (6) umfasst, wobei der Behälter (1) dazu eingerichtet ist, dadurch unter Druck gesetzt zu werden, dass mindestens ein Teil der Treibmittelmenge (2) sich in dem Raum zwischen dem inneren Behälter und dem äußeren Behälter befindet, wobei bei einer Temperatur von 5°C das Treibmittel (2) einen Dampfdruck von mehr als 115 kPa aufweist und bei einer Temperatur von 25°C einen Dampfdruck von weniger als 1000 kPa aufweist, **dadurch gekennzeichnet, dass** der Behälter (1) zusätzlich einen flexiblen Zwischenbehälter (8) umfasst, der sich zwischen dem inneren Behälter (6) und dem äußeren Behälter (5) befindet, wobei der Behälter dazu eingerichtet ist, mittels des Vorhandenseins mindestens eines Teils der Treibmittelmenge (2) in dem Raum zwischen dem inneren Behälter (6) und dem Zwischenbehälter (8) unter Druck gesetzt zu werden.

2. Kombination nach Anspruch 1, **dadurch gekennzeichnet, dass** der Dampfdruck des Treibmittels (2) bei 5°C mindestens 150 kPa beträgt.

3. Kombination nach einem der vorhergehenden Ansprüche, **dadurch gekennzeichnet, dass** der Dampfdruck des Treibmittels (2) bei 25°C höchstens 700 kPa beträgt.

4. Kombination nach einem der vorhergehenden Ansprüche, **dadurch gekennzeichnet, dass** sich die Treibmittelmenge (2) mindestens teilweise in flüssigem Zustand (4) in einem Reservoir (18) befindet und der Behälter (1) und/oder das Reservoir (18) mit Verbindungsmitteln versehen ist oder sind, durch die das Reservoir (18) mit dem Behälter (1) verbunden werden kann, um ihn unter Druck zu setzen.

5. Kombination nach Anspruch 4, **dadurch gekennzeichnet, dass** der Behälter (1) ein Verschfussteil (9) mit einem Absperrventil (10) umfasst, wobei das Verschlussteil (9), wenn das Absperrventil (10) offen ist, die Öffnung (11) umfasst, und wobei das Verschlussteil (9) einen Raum (12) für den flüssigen Teil (4) der Treibmittelmenge (2) umfasst.

6. Kombination nach einem der vorhergehenden Ansprüche, **dadurch gekennzeichnet, dass** der Behälter (1) dazu eingerichtet ist, die Treibmittelmenge (2) vollständig in sich zu enthalten.

7. Kombination nach einem der vorhergehenden Ansprüche, **dadurch gekennzeichnet, dass** der Behälter (1) einen Strömungswiderstand (15) für das aus dem Behälter (1) strömende Getränk umfasst, wobei der Strömungswiderstand (15) von dem Druck in dem Behälter (1) abhängig ist.

8. Kombination nach einem der vorhergehenden Ansprüche, **dadurch gekennzeichnet, dass** der Behälter (1) mit einem Reduktionsventil versehen ist, das die Strömung des Treibmittels (2) verhindert, wenn der Druck in dem Raum zwischen dem inneren Behälter (6) und dem äußeren Behälter (5) größer als der Dampfdruck des Treibmittels (2) minus ein bestimmter Wert ist.

9. Kombination nach einem der vorhergehenden Ansprüche, **dadurch gekennzeichnet, dass** das flüssige Nahrungsmittel ein Softdrink oder Bier, der oder das CO2 enthält, ist und dass der Dampfdruck des Treibmittels (2) auf allen Temperaturen zwischen 1 °C und 30°C größer als der Dampfdruck des CO2 in dem Nahrungsmittel auf derselben Temperatur ist.

10. Kombination nach einem der vorhergehenden Ansprüche, **dadurch gekennzeichnet, dass** das flüssige Nahrungsmittel Bier ist.

11. Kombination nach einem der vorhergehenden Ansprüche 1 bis 8, **dadurch gekennzeichnet, dass** das Nahrungsmittel eine Soße ist.

12. Kombination nach einem der vorhergehenden Ansprüche, **dadurch gekennzeichnet, dass** das Treibmittel (2) aus 1,1,1,2,3,3,3-Heptafluorpropan oder HFC-227, oder 1,1,1,2-Tetrafluorethan oder HFC 134a besteht oder dieses enthält.

13. Anwendung eines Treibmittels (2) zum Anbringen eines flüssigen Nahrungsmittels unter Druck in einem Behälter (1), der dazu bestimmt ist, das flüssige Nahrungsmittel auf kontrollierte Weise ausströmen zu lassen, wobei der Behälter (1) einen starren äußeren Behälter (5) und einen flexiblen inneren Behälter (6) umfasst, wobei der Behälter (1) dadurch unter Druck gesetzt wird, dass ein Teil der Treibmittelmenge (2) in den Raum zwischen dem inneren Behälter (6) und dem äußeren Behälter (5) eingebracht wird, wobei der Behälter (1) zusätzlich einen Zwischenbehälter umfasst, der sich zwischen dem äußeren Behälter (5) und dem inneren Behälter (6) befindet, wobei der Behälter (1) dadurch unter Druck gesetzt wird, dass ein Teil der Treibmittelmenge (2) in den Raum zwischen dem inneren Behälter (6) und dem Zwischenbehälter (8) eingebracht wird, wobei das Treibmittel (2) bei einer Temperatur von 5°C einen Dampfdruck von mehr als 115 kPa aufweist und bei einer Temperatur von 25°C einen Dampfdruck von weniger als 1000 kPa aufweist.

14. Anwendung nach Anspruch 13, **dadurch gekennzeichnet, dass** der Dampfdruck des Treibmittels (2) bei 5°C mindestens 150 kPa beträgt.

15. Anwendung nach Anspruch 13 oder 14, **dadurch gekennzeichnet, dass** der Dampfdruck des Treibmittels (2) bei 25°C höchstens 700 kPa beträgt.

16. Anwendung nach einem der Ansprüche 13 bis 15, **dadurch gekennzeichnet, dass** das Nahrungsmittel ein Getränk ist.

17. Anwendung nach einem der Ansprüche 13 bis 16, **dadurch gekennzeichnet, dass** das Nahrungsmittel ein Softdrink oder Bier, der oder das CO2 enthält, ist und dass der Dampfdruck des Treibmittels (2) auf allen Temperaturen zwischen 1°C und 30°C größer als der Dampfdruck des CO2 in dem Nahrungsmittel auf derselben Temperatur ist.

18. Anwendung nach einem der Ansprüche 13 bis 15, **dadurch gekennzeichnet, dass** das Nahrungsmittel eine Soße ist.

## Revendications

1. Combinaison d'un récipient (1) pour une denrée alimentaire liquide et d'une quantité de propulseur (2) pour la mise du récipient (1) sous pression dans le but de faire en sorte que la denrée alimentaire s'écoule hors du récipient (1) via une ouverture (11) ; dans laquelle le récipient (1) comprend un récipient externe rigide (5) et un récipient interne inflexible (6) ; dans laquelle le récipient (1) est conçu pour être mis sous pression via au moins une partie de la quantité de propulseur (2) placée dans l'espace ménagé entre le récipient interne et le récipient externe ; dans laquelle le récipient comprend en outre un récipient intermédiaire flexible placé entre le récipient interne et le récipient externe dans laquelle, à une température de 5 °C, le propulseur (2) possède une pression de vapeur supérieure à 115 kPa et, à une température de 25 °C, possède une pression de vapeur inférieure à 1.000 kPa ; **caractérisée en ce que** le récipient (1) comprend en outre un récipient intermédiaire flexible (8) situé entre le récipient interne (6) et le récipient externe (5) ; dans laquelle le récipient est conçu pour être mis sous pression au moyen de la présence d'au moins une partie de la quantité du propulseur (2) dans l'espace ménagé entre le récipient interne (6) et le récipient intermédiaire (8).

2. Combinaison selon la revendication 1, **caractérisée en ce que** la pression de vapeur du propulseur (2) à 5 °C s'élève au minimum à 150 kPa.

3. Combinaison selon l'une quelconque des revendications précédentes, **caractérisée en ce que** la pression de vapeur du propulseur (2) à 25 °C s'élève au maximum à 700 kPa.

4. Combinaison selon l'une quelconque des revendications précédentes, **caractérisée en ce que** la quantité du propulseur (2) est au moins en partie dans un état liquide (4) dans un réservoir (18), et le récipient (1) et/ou le réservoir (18) est ou sont équipé(s) d'un moyen de raccordement par lequel le réservoir (18) peut être raccordé au récipient (1) afin de mettre ce dernier sous pression.

5. Combinaison selon la revendication 4, **caractérisée en ce que** le récipient (1) comprend un élément de fermeture (9) comprenant une soupape d'arrêt (10) ; dans laquelle l'élément de fermeture (9), lorsque la soupape d'arrêt (10) est ouverte, comprend l'ouverture (11); et dans laquelle l'élément de fermeture (9) comprend un espace (12) pour la partie liquide (4) de la quantité de propulseur (2).

6. Combinaison selon l'une quelconque des revendications précédentes, **caractérisée en ce que** le récipient (1) est conçu pour contenir complètement la quantité de propulseur (2) en son sein.

7. Combinaison selon l'une quelconque des revendications précédentes, **caractérisée en ce que** le récipient (1) comprend une résistance à l'écoulement (15) pour la boisson s'écoulant hors du récipient (1) ; dans laquelle la résistance à l'écoulement (15) dépend de la pression régnant dans le récipient (1).

8. Combinaison selon l'une quelconque des revendications précédentes, **caractérisée en ce que** le récipient (1) est équipé d'une soupape de réduction qui empêche l'écoulement du propulseur (2) lorsque la pression régnant dans l'espace entre le récipient interne (6) et le récipient externe (5) est supérieure à la pression de vapeur du propulseur (2) moins une certaine valeur.

9. Combinaison selon l'une quelconque des revendications précédentes, **caractérisée en ce que** la denrée alimentaire liquide est une boisson gazeuse ou de la bière, contenant du CO₂, et **en ce que** la pression de vapeur du propulseur (2) à toutes les températures entre 1 °C et 30 °C est supérieure à la pression de vapeur du CO₂ dans la denrée alimentaire, à la même température.

10. Combinaison selon l'une quelconque des revendications précédentes, **caractérisée en ce que** la denrée alimentaire liquide est de la bière.

11. Combinaison selon l'une quelconque des revendications 1 à 8, **caractérisée en ce que** la denrée alimentaire est une sauce.

12. Combinaison selon l'une quelconque des revendications précédentes, **caractérisée en ce que** le propulseur (2) est constitué ou continent du 1,1,1,2,3,3,3-heptafluoropropane ou HFC-227 ou du 1,1,1,2-tétrafluoroéthane ou HFC134a.

13. Utilisation d'un propulseur (2) pour la mise sous pression d'une denrée élémentaire liquide dans un récipient (1) qui est destiné à laisser la denrée alimentaire liquide s'écouler d'une manière contrôlée; dans laquelle le récipient (1) comprend un récipient externe rigide (5) et un récipient interne flexible (6) ; dans laquelle le récipient (1) est mis sous pression en introduisant une partie de la quantité de propulseur (2) dans l'espace ménagé entre le récipient interne (6) et le récipient externe (5) ; dans laquelle le récipient (1) comprend en outre un récipient intermédiaire situé entre le récipient externe (5) et le récipient interne (6) ; dans laquelle le récipient (1) est mis sous pression en introduisant une partie de la quantité du propulseur (2) dans l'espace ménagé entre le récipient interne (6) et le récipient intermédiaire (8) ; dans laquelle le propulseur (2), à une température de 5 °C, possède une pression de vapeur supérieure à 115 kPa et, à une température de 25 °C, possède une pression de vapeur inférieure à 1.000 kPa.

14. Utilisation selon la revendication 13, **caractérisée en ce que** la pression de vapeur du propulseur (2) à 5°C s'élève au minimum à 150 kPa.

15. Utilisation selon la revendication 13 ou 14, **caractérisée en ce que** la pression de vapeur du propulseur (2) à 25 °C s'élève au maximum à 700 kPa.

16. Utilisation selon l'une quelconque des revendications 13 à 15, **caractérisée en ce que** la denrée alimentaire est une boisson.

17. Utilisation selon l'une quelconque des revendications 13 à 16, **caractérisée en ce que** la denrée alimentaire est une boisson gazeuse ou de la bière, contenant du CO₂, et **en ce que** la pression de vapeur du propulseur (2) à toutes les températures entre 1 °C et 30 °C est supérieure à la pression de vapeur du CO₂ dans la denrée alimentaire, à la même température.

18. Utilisation selon l'une quelconque des revendications 13 à 15, **caractérisée en ce que** la denrée alimentaire est une sauce.
